(19) **Europäisches Patentamt / European Patent Office / Office européen des brevets**

(11) **EP 1 316 783 B1**

(12) **EUROPÄISCHE PATENTSCHRIFT**

(45) Veröffentlichungstag und Bekanntmachung des Hinweises auf die Patenterteilung:
**23.01.2008 Patentblatt 2008/04**

(51) Int Cl.:
*G01H 15/00* (2006.01)

(21) Anmeldenummer: **03005040.5**

(22) Anmeldetag: **06.03.2003**

(54) **Verfahren zur Messung der akustischen Impendanz**

Method for measuring the acoustical impedance

Procédé de mesure de l'impédance acoustique

(84) Benannte Vertragsstaaten:
**CH DE DK LI**

(43) Veröffentlichungstag der Anmeldung:
**04.06.2003 Patentblatt 2003/23**

(73) Patentinhaber: **PHONAK AG**
**8712 Stäfa (CH)**

(72) Erfinder: **Stirnemann, Alfred**
**8702 Zollikon (CH)**

(74) Vertreter: **Troesch Scheidegger Werner AG**
**Schwäntenmos 14**
**8126 Zumikon (CH)**

(56) Entgegenhaltungen:
- **DALMONT J -P: "Acoustic impedance measurement, Part I: A review" J SOUND VIB; JOURNAL OF SOUND AND VIBRATION JUN 7 2001, Bd. 243, Nr. 3, 7. Juni 2001 (2001-06-07), Seiten 427-439, XP002252344**
- **MCLEAN J S ET AL: "A THEORETICAL AND EXPERIMENTAL INVESTIGATION OF THE THROAT IMPEDANCE CHARACTERISTICS OF CONSTANT DIRECTIVITY HORNS" JOURNAL OF THE ACOUSTICAL SOCIETY OF AMERICA, AMERICAN INSTITUTE OF PHYSICS. NEW YORK, US, Bd. 92, Nr. 5, 1. November 1992 (1992-11-01), Seiten 2509-2520, XP000328833 ISSN: 0001-4966**

**Beschreibung**

Die vorliegende Erfindung betrifft ein Verfahren nach dem Oberbegriff von Anspruch 1.

Für die Bestimmung der akustischen Impedanz eines geschlossenen Raumes wird herkömmlicherweise eine aus zwei Komponenten bestehende Messeinrichtung eingesetzt. Die Komponenten setzen sich aus einem Mikrofon und einem Hörer zusammen, welche mit einer Auswertungseinheit verbunden sind. Oft wird die Einrichtung durch einen dritten Anschluss ergänzt, welcher zur Anbringung eines statischen Druckes dient.

So wird insbesondere für die Messung der akustischen Impedanz des Ohres in Funktion des statischen Druckes zu diagnostischen Zwecken eine Probe mit drei Anschlüssen eingesetzt. Die Anschlüsse verbinden dabei die Probe, welche in den Gehörgang eingesetzt wird, mit einem statischen Druckgenerator, einem Mikrofon und einem Hörer.

Die Auswertung erfolgt dabei in einer elektronischen resp. rechnergestützten Auswertungseinheit. Die Kalibrierung der Messeinrichtung erfolgt typischerweise unter Verwendung von Sets von Röhrchen mit definierten geometrischen Abmessungen und akustischem Verhalten. Für die Charakterisierung des Messsystems wird dabei das Prinzip von Thévenin angewendet, welches für die Messung von unbekannten Impedanzen eingesetzt wird. Dabei kann das Messsystem durch eine Spannungsquelle und eine erste Impedanz dargestellt werden.

Über einer zweiten, in Serie geschalteten unbekannten Impedanz wird dann die Spannung gemessen. Diese gemessene Spannung steht in einem eindeutigen Zusammenhang mit der zu messenden unbekannten Impedanz, wobei alle Grössen resp. Parameter komplexe Funktionen der Frequenz darstellen. Das System muss nun zuerst kalibriert werden, d.h. die Parameterwerte des Systems müssen zuerst mit kalibrierten Impedanzen berechnet werden, im dargestellten Fall mit mindestens zwei Kalibrierimpedanzen. Wenn nun die Parameter der anregenden Spannungsquelle und der ersten Impedanz bekannt sind, kann die zweite unbekannte Impedanz durch die Messung der Spannung über dieser zweiten Impedanz bestimmt werden. Dieses Verfahren ist ausführlich in der US 5,792,072 beschrieben.

In der US 4,289,143 ist ebenfalls ein derartiges Verfahren und eine derartige Vorrichtung beschrieben. Dabei wird eine Sonde in den Eingang des Gehörganges dicht eingesetzt, welche kurze akustische Pulse in einem breiten Frequenzband aussendet, welche in den Gehörgang eindringen und deren Antwortsignale durch ein ebenfalls in der Sonde integriertes Mikrofon empfangen und in elektrische Signale umgewandelt werden. Diese Signale werden anschliessend digitalisiert und in Fourier-Reihen transformiert, welche anschliessend durch einen Prozessor ausgewertet werden. Die Auswertung erfolgt gegenüber gespeicherten Werten, welche durch vorgängige Anwendung des Verfahrens auf zwei kalibrierte Messimpedanzen, wie beispielsweise zwei unterschiedliche, zylindrische Messröhrchen bestimmt wurden. Der Prozessor resp. die Auswertungselektronik wird gleichzeitig auch für die Ansteuerung des Pulsgenerators eingesetzt und ggf. auch für die Ansteuerung eines statischen Druckgenerators, welcher ebenfalls am Sensor angeschlossen sein kann.

Die beiden vorgängig beschriebenen Verfahren weisen allerdings einige Nachteile auf. So ist für die Bestimmung der zweiten Impedanz (komplexe Impedanz) eine Phasenrelation zwischen der Spannung der Spannungsquelle (resp. des Systems) und der messbaren Spannung über der zweiten Impedanz erforderlich. Da aber diese Spannung beim Prinzip von Thévenin nicht direkt beobachtbar ist, muss diese Phase auf Umwegen bestimmt werden.

Weiter ist das Verfahren dann nicht mehr anwendbar, wenn sich die Anregung zwischen Kalibrierung und Messung ändert, beispielsweise wenn die Generatorspannung nicht konstant ist. Schliesslich verfälschen auch Raucheffekt beim aktiven Messen der Spannung über der zweiten Impedanz das Resultat.

Beim universellen Einsatz des Verfahrens zur Messung von allgemeinen akustischen Impedanzen mittels der in der US 4,289,143 beschriebenen Sonde gibt es auch geometrische Probleme. Da die drei Anschlüsse für Hörer, Mikrofon und statischen Druckgenerator am Austritt der Sonde in der gleichen Ebene liegen, in welcher die zu messende Impedanz definiert ist, führt dies zu geometrischen Problemen bei der Ankopplung beliebiger akustischer Elemente, speziell wenn deren Öffnungsquerschnitt kleiner als der Durchmesser der Sonde ist.

Dies ist beispielsweise der Fall bei der Ankoppelung von kleinen Röhrchen, sei es als Referenzimpedanzen für die Kalibrierung der Einrichtung oder als Messobjekte. In solchen Fällen ist ein zusätzliches Ankoppelungsvolumen unumgänglich. Auch ist die Anbringung von komplexen Modulen wie beispielsweise einem Windschutz oder einer Membrane problematisch. Weiter besteht gerade beim Einsatz im Ohrbereich die Gefahr der Verstopfung der Sonden, was die Messung entweder vollkommen verunmöglicht oder zumindest die Kalibrierung zerstört und damit das Resultat verfälscht.

Weiter ist aus dem Dokument 'Journal of Sound an Vibration (7. Juni 2001): "Acoustic impedance measurement, Part I : A review" von J-P Dalmont, Bd 243, Nr. 3, Seiten 427 - 439' ein Verfahren zur Bestimmung on akustischen Impedanzen bekannt, bei welcher als Berechnungsgrundlage mit einer Übertragunsmatrix in Form eine Mulitports gearbeitet wird, welche unter Verwendung von bekannten Impedanzen kalibriert wird.

Die Aufgabe der vorliegenden Erfindung bestand nun darin, ein Messverfahren zu finden, welches die bekannten Nachteile behebt und eine einfache und präzise Impedanzmessung erlaubt.

Diese Aufgabe wird erfindungsgemäss durch das Verfahren nach Anspruch 1 gelöst. Weitere, bevorzugte Ausführungsformen der Erfindung ergeben sich aus den Merkmalen der Ansprüche 2 bis 8 resp. 10 bis 13.

Dadurch, dass der Zusammenhang zwischen Anregung und Spannung über der zu messenden Impedanz mit einem Kettenübertragungsmatrixmodell beschrieben wird, wird die Anregung im Gegensatz zum Théveninmodell beobachtbar resp. messbar. Damit wird die Bestimmung der Phasenrelation zwischen diesen beiden Werten bedeutend erleichtert. Weiter wird damit eine dimensionslose Übertragungsfunktion eingesetzt, was die Berechnung der Impedanz unabhängig insbesondere von der Anregungsspannung macht.

Damit wird das mathematische Modell der Übertragung zwischen Anregung und Mikrofon in Bezug auf die Spannungsübertragung vollständig durch die beiden Koeffizienten $a_{11}$ und $a_{12}$ der Kettenübertragungsmatrix beschrieben, entsprechend der Gleichung:

$$U_{ab} = \frac{u_a}{u_b} = a_{11} + a_{12}/Z$$

Diese Koeffizienten $a_{11}$ und $a_{12}$ werden nun erfindungsgemäss aufgrund von bekannten Kalibrierungsimpedanzen durch Auflösung des entsprechenden überbestimmten linearen Gleichungssystems bestimmt. Damit kann eine im Vergleich zum bekannten Verfahren nach Thévenin einfachere Durchführung und Berechnung der Kalibrierung erfolgen.

Die einzelnen Übertragungsfunktionen bei der Durchführung der Kalibrierung werden vorzugsweise aus dem Quotienten zwischen dem Autopowerspektrum $U_a U_a^*$ und dem gemittelten Crosspowerspektrum $U_b U_a^*$ berechnet. Damit werden vorteilhaft Störungen der Messgrösse $u_b$ unterdrückt, d.h. der mittels des Mikrofons gemessenen Spannung der Impedanz. Minimal werden hierfür zwei Kalibrierungsimpedanzen eingesetzt.

Vorzugsweise wird das Gleichungssystem im Sinne der kleinsten Quadrate aufgelöst.

Die Anregung, welche vorzugsweise über einen Lautsprecher erfolgt, wird vorzugsweise mittels eines gesteuerten Frequenzgenerators durchgeführt. Dabei wird vorzugsweise ein breitbandiges Signal erzeugt, wie beispielsweise ein weisses Rauschen. Das Frequenzspektrum kann je nach Einsatz auch auf eine bestimmte Bandbreite eingeschränkt werden.

Um universelle Messungen von auch geometrisch unterschiedlichen Messobjekten, welche mittels eines zusätzlichen Adapters angekoppelt werden, zu ermöglichen, wird weiter erfindungsgemäss entsprechend den Merkmalen von Anspruch 9 vorgeschlagen, als Berechnungsmodell zwei seriell hintereinander geschaltete Zweitore zu verwenden, d.h. zwei nacheinander angeordnete Kettenübertragungsmatrizen. Dabei wird das Mikrofon zwischen dem Ausgang des ersten Zweitores und dem Eingang des zweiten Zweitores eingesetzt, d.h. die entsprechende Messung zwischen den beiden Matrizen vorgenommen, während die Impedanz am Ausgang der zweiten Matrix angeordnet ist. Damit widerspiegelt die erste Matrix das Modell des Grundelements der Messsonde und die zweite Matrix das Modell des nach dem Mikrofon anzuordnenden Adapters. Das Grundelement der Sonde kann für beliebige Anwendungen immer gleich aufgebaut sein und damit im Wesentlichen konstante Verhältnisse bilden. Der Adapter soll lösbar mit dem Grundelement verbunden sein und in einer Vielzahl von unterschiedlichen Ausführungen, insbesondere auch unterschiedliche Geometrien aufweisend, entsprechend dem Einsatzgebiet ausgeführt sein. Damit weisen die unterschiedlichen Adapter unterschiedliches Systemverhalten auf und es muss für jeden Adapter eine separate Kalibrierung durchgeführt werden.

Vorteilhaft bei dieser Ausführung ist, dass sich das aus 8 Matrixelementen bestehende Modell auf drei Basisparameter, in Form von komplexen Funktionen der Frequenz, reduzieren lässt, welche das Modell ausreichend genau zu beschreiben vermögen.

Die drei Parameter lassen sich durch Messungen von drei unterschiedlichen Kalibrierimpedanzen durch Auflösung des resultierenden linearen Gleichungssystems bestimmen und anschliessend für die Berechnung der unbekannten Impedanz verwenden. Wiederum müssen lediglich Übertragungsfunktionen zwischen Anregung und Mikrofonspannung gemessen werden.

Weiter wird vorzugsweise vorgeschlagen, zwischen der Anregung und dem Mikrofon einen akustischen Widerstand einzusetzen. Es hat sich gezeigt, dass sich dadurch die Genauigkeit der Messung weiter steigern lässt. Insbesondere kann der Widerstand bezüglich der Sensitivität auf Mikrofonfehler optimiert werden.

Gerade für Ohrimpedanzmessungen gelangen die Vorzüge des erfindungsgemässen Verfahrens voll zum tragen. Bei der erforderlichen Flexibilität bezüglich der Ankopplung ist das hier beschriebene Verfahren mit einem beliebigen Adapter, welcher schnell kalibriert und modelliert werden kann, von grossem Vorteil.

Weiter eignet sich die vorliegende Erfindung besonders gut für die Anwendung nach Ansprüchen 14 oder 15.

Ein Ausführungsbeispiel der vorliegenden Erfindung wird nachstehend anhand von Zeichnungen noch näher erläutert. Es zeigen

Fig.1　　das Schema der Bestimmung einer Impedanz nach dem Thévenin-Prinzip;

Fig.2　　das Schema einer Ausführungsform des erfindungsgemässen Verfahrens der Messung einer Impedanz mittels Kettenmatrix;

Fig.3　　eine Ausführungsform des dem erfindungsgemässen Verfahren zugrunde liegenden linearen Gleichungssystems;

Fig.4 das Schema einer weiteren, bevorzugten Ausführungsform des erfindungsgemässen Verfahrens mit zwei Matrizen; und

Fig.5 schematisch die Anordnung einer Messvorrichtung zur Anwendung des Verfahrens nach Figur 4.

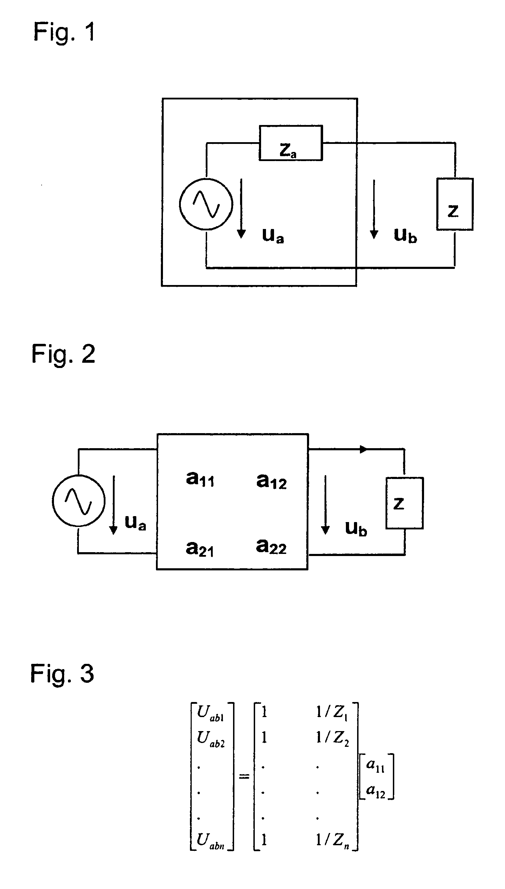

In Figur 1 ist schematisch das Prinzip der Messung einer unbekannten Impedanz nach Thévenin dargestellt. Dabei wird von einem Basissystem ausgegangen, welches theoretisch als eine Spannungsquelle mit der komplexen Spannung $u_a$ sowie einer Gesamt-Serieimpedanz $Z_a$ beschrieben werden kann. Dieses Basissystem dient der Anregung und Übertragung der Spannung an die zu messende Lastimpedanz $Z$. Über dieser Lastimpedanz $Z$ ist beispielsweise die Spannung $u_b$ messbar. Die Grössen stehen dabei in folgender Beziehung:

$$Z = \frac{u_b Z_a}{u_a - u_b}$$

Die Parameter $u_a$ und $Z_a$ können aus der Durchführung einer Messung mit mindestens zwei bekannten Eichimpedanzen $Z(1)$ und $Z(2)$ berechnet werden. Damit kann die Lastimpedanz $Z$ durch Messung der Spannung $u_b$ gemäss obigem Gleichungssystem bestimmt werden. Dabei ist zu beachten, dass es sich bei allen Grössen um komplexe Funktionen in Abhängigkeit der Frequenz der Anregungsspannung $u_a$ handelt. Aus diesem Grund ist auch die Phasenrelation zwischen $u_a$ und $u_b$ erforderlich, welche separat bestimmt werden muss, da $u_a$ in diesem System nicht direkt beobachtbar resp. messbar ist.

Um nun diesen Nachteil auszuräumen wird beim Lösungsansatz der vorliegenden Erfindung ein anderes Modell eingesetzt, welches beispielsweise durch das Schema nach Figur 2 dargestellt werden kann. Bei diesem Ansatz wird die Anregung durch einen Generator mit der Spannung $u_a$ als beobachtbar res. messbar angenommen, und die Grenzen des Basissystemes erst nach der Erzeugung dieser Anregungsspannung gezogen. Als Übertragungssystem wird als Modell ein Zweitor mit zugehöriger Kettenübertragungsmatrix $A$ verwendet, welche durch die Parameter $a_{11}$ bis $a_{22}$ beschrieben wird. Damit kann eine dimensionslose Übertragungsfunktion $U_{ab}$ als Spannungsverhältnis zwischen der Eingangs-Generatorspannung $u_a$ zur Ausgangs- resp. Messspannung $u_b$ über der Impedanz $Z$ definiert werden.

$$U_{ab} = \frac{u_a}{u_b} = a_{11} + a_{12}/Z$$

Damit wird das Basissystem in Bezug auf die Spannungsübertragung durch die beiden Parameter $a_{11}$ und $a_{12}$ vollständig beschrieben, wobei auch hier alle Grössen komplexe Funktionen in Abhängigkeit der Anregungsfrequenz darstellen.

Analog dem Thévenin-Prinzip müssen die Parameter a11 und $a_{12}$ nun ebenfalls durch Messung mit Kalibrierimpedanzen $Z_1, Z_2, ..., Z_n$ bestimmt werden, welche in ein überbestimmtes lineares Gleichungssystem gemäss Figur 3 eingesetzt werden.

Um auch Störungen der Messgrösse $u_b$ zu unterdrücken, werden die zugehörigen Übertragungsfunktionen des linearen Gleichungssystems vorteilhaft durch Anwendung von Mittelungstechnik berechnet. Vorzugsweise wird dabei jeweils eine Übertragungsfunktion $U_a$ durch die Division des gemessenen Autopowerspektrums $U_a U_a^*$ mit dem gemittelten Crosspowerspektrum $U_b U_a^*$ nach folgender Formel berechnet:

$$U_{ab} = \frac{U_a U_a^*}{U_b U_a^*}$$

Die Auflösung des linearen Gleichungssystems nach Figur 3 im Sinne der kleinsten Quadrate liefert die beiden Parameter $a_{11}$ und $a_{12}$. Damit kann nun für eine unbekannte Impedanz $Z$ aus der Messung des Spannungsverhältnisses $u_a/u_b$ die entsprechende Übertragungsfunktion $U_{ab}$ gemessen werden und damit nach folgender Formel schliesslich die Impedanz $Z$ ermittelt werden:

$$Z = \frac{a_{12}}{U_{ab} - a_{11}}$$

Der Vorteil dieses Verfahrens liegt nun darin, dass kein Aufwand für die Bestimmung der Phase zwischen $u_a$ und $u_b$ betrieben werden muss und durch die Verwendung einer dimensionslosen Übertragungsfunktion $U_{ab}$ die Messung von der Anregungsspannung unabhängig wird. Beim bevorzugten Einsatz der Mittelungstechnik wird auch eine geringere Empfindlichkeit des Messsystems gegenüber Messrauschen erzielt, d.h. die Empfindlichkeit gegenüber Mikrofonrauschen und Störgeräuschen stark reduziert.

Mit diesem Prinzip lässt sich nun einfach ein Messgerät zur exakten Bestimmung von Impedanzen von Hohlräumen aufbauen, welches mit herkömmlichen Mess- und Auswertungsmitteln betrieben werden kann. Durch das lineare Gleichungssystem kann eine einfache Kalibrierung solcher Messgeräte durchgeführt werden, was insbesondere deren Einsatz auch ausserhalb von Laborbedingungen wirtschaftlich macht.

Insbesondere eignet sich das erfindungsgemässe Verfahren in der Anwendung der Messung der akustischen Impedanz des Ohres, wobei analog zu den bekannten Verfahren diese Messung unter unterschiedlichen statischen Drücken durchgeführt werden kann.

Um das Verfahren sehr universell praktisch einsetzen zu können, insbesondere um das Basisgerät für unterschiedliche Messarten mit unterschiedlichen Geometrien einsetzen zu können, ist das Prinzip noch weiter ausgebaut worden.

Um auch unterschiedliche Messbedingungen optimal abzudecken wird nun vorzugsweise vorgeschlagen, entsprechende Adapter am Basisgerät anzubringen. Diese Adapter modifizieren naturgemäss das Basissystem und erlauben nicht mehr die Anwendung des Prinzips von Thévenin, da die Mikrofonspannung nicht mehr den über der zu messenden Impedanz herrschenden Schalldruck repräsentiert.

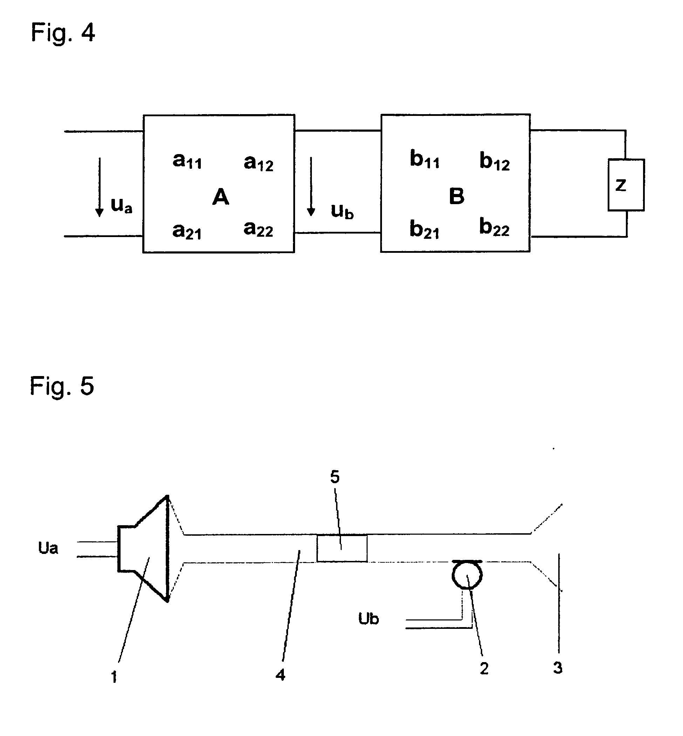

Es wird nun hierfür erfindungsgemäss vorzugsweise vorgeschlagen, das erfindungsgemässe Prinzip um eine Adaptormatrix B zu erweitern, wie dies in Figur 4 schematisch dargestellt ist. Dabei wird die Spannung $u_b$ nun nicht direkt am Ende über der zu messenden Impedanz abgegriffen, sondern zwischen den beiden Matrizen A und B. Das hat den Vorteil, dass man bei der praktischen Realisation eines solchen Messgerätes das Mikrofon nicht zuvorderst bei der zu messenden Impedanz anbringen muss, sondern etwas zurückgesetzt, was einerseits das Mikrofon schützt und andererseits der Gestaltung eines beliebigen Adapters freien Spielraum lässt, wie dies schematisch in Figur 5 dargestellt ist.

Es hat sich nun gezeigt, dass sich für die vorliegende Anwendung die 8 Parameter $a_{11},..,a_{22}$ und $b_{11},..,b_{22}$ der beiden Matrizen A und B gemäss folgender Gleichung auf drei Parameter $d_1$, $d_2$ und $d_3$ reduzieren lassen, um die Impedanz Z zu beschreiben:

$$Z = \frac{d_2}{U_{ab} - d_1} - d_3$$

Diese drei Parameter $d_1$, $d_2$ und $d_3$ sind analog zu den vorgängig beschriebenen Parametern $a_{11}$ und $a_{12}$ ebenfalls komplexe Funktionen in Abhängigkeit der Anregungsfrequenz. Entsprechend dem vorgängig gezeigten Ansatz für die Berechnung der Parameter $a_{11}$ und $a_{12}$ kann nun analog ein überbestimmtes lineares Gleichungssystem formuliert werden, welches unter Einsatz von mindestens drei bekannten Kalibrierimpedanzen und Auflösung des Gleichungssystems im Sinne der kleinsten Quadrate die Parameter $d_1$, $d_2$ und $d_3$ liefert.

Eine optimale Messgenauigkeit wird weiter dann erreicht, wenn die Gleichungen frequenz- und impedanzspezifisch gewichtet werden. Damit können optimale Messgenauigkeiten für einen definierten Anwendungsbereich erreicht werden.

Es hat sich weiter als Vorteil erwiesen, wenn zwischen dem Hörer als Anregung und dem Mikrofon ein akustischer Widerstand angeordnet wird. Durch diesen akustischen Widerstand kann die Genauigkeit der Messanordnung weiter verbessert werden. Vorzugsweise kann der Widerstand für einen bestimmten Impedanzbereich insbesondere in Bezug auf die Sensitivität auf Mikrofonfehler optimiert werden.

Neben der Anwendung im Hörgerätebereich ist das Verfahren universell für allgemeine Anwendungen der Impedanzmessung einsetzbar, insbesondere im Bereich der Qualitätskontrolle von porösen Materialien, Membranen oder Textilien. Insbesondere die Möglichkeit des Einsatzes von unterschiedlichsten Adaptern mit unterschiedlichen geometrischen Abmessungen erlaubt den universellen Einsatz einer solchen Messvorrichtung nach dem erfindungsgemässen Messverfahren.

**Patentansprüche**

1. Verfahren zur Bestimmung der akustischen Impedanz (Z), bei welchem

- eine Sonde mit einem Mittel zur akustischen Anregung und einem Mikrofon an den zu messenden Bereich angesetzt wird;
- akustische Signale über das genannte Mittel ausgesendet werden und über das Mikrofon wieder empfangen werden;
- die über das Mikrofon empfangenen Signale in elektrische Signale umgewandelt und einer Auswertungseinheit zugeführt werden, in welcher der Wert der Impedanz bestimmt wird;
- als Berechnungsgrundlage für die Impedanz (Z) mit einer definierten Anregung und einer anschliessenden Kettenübertragungsmatrix (A) in Form eines Zweitores mit den Koeffizienten $a_{11}$, $a_{12}$, $a_{21}$, $a_{22}$ bis zur Impedanz (Z) gearbeitet wird;
- wobei jeweils das Spannungsverhältnis zwischen Anregung ($u_a$) und Messspannung ($u_b$) als dimensionslose Übertragungsfunktion ($U_{ab}$) in Form einer komplexen Funktion der Anregungsfrequenz beschrieben wird;
- mittels einer Anzahl bekannter akustischer Impedanzen ($Z_1,..,Z_n$) welche unterschiedliche Kalibrierbereiche abdecken, eine Reihe von akustischen Kalibriersignalen mittels der definierten Anregung erzeugt werden;
- die jeweils über das Mikrofon empfangenen Kalibriersignale erfasst und die elektrischen Werte ($u_b$) zusammen mit dem jeweiligen Spannungswert der Anregung ($u_a$) zur Ermittlung der Resultate der jeweiligen Übertragungsfunktionen ($U_{ab1},..,U_{abn}$) zusammengeführt werden,

**dadurch gekennzeichnet, dass**

- die Übertragungsfunktionen ($U_{ab1},..,U_{abn}$) der Kalibriersignale in einem überbestimmten linearen Gleichungssystem zusammengeführt werden und das Gleichungssystem aufgelöst und die beiden Koeffizienten $a_{11}$, $a_{12}$ der Kettenübertragungsmatrix (A) berechnet werden; und schliesslich

- die zu messende Impedanz (Z) durch Auswertung der Übertragungsfunktion ($U_{ab}$) bei bestimmter Anregung ($u_a$) unter Verwendung der durch die Kalibrierung ermittelten Koeffizienten $a_{11}, a_{12}$ der Kettenübertragungsmatrix (A) bestimmt wird.

2. Verfahren nach Anspruch 1, **dadurch gekennzeichnet, dass** als Mittel zur akustischen Anregung ein Lautsprecher verwendet wird.

3. Verfahren nach Anspruch 1 oder 2, **dadurch gekennzeichnet, dass** das überbestimmte lineare Gleichungssystem im Sinne der kleinsten Quadrate aufgelöst wird.

4. Verfahren nach einem der Ansprüche 1 bis 3, **dadurch gekennzeichnet, dass** mindestens zwei unterschiedliche Impedanzen ($Z_1, Z_2$) verwendet werden.

5. Verfahren nach einem der Ansprüche 1 bis 4, **dadurch gekennzeichnet, dass** als Kalibrierimpedanzen eine Kombination von Hohlkörpern und Röhrchen mit definierten Abmessungen und bekannten Impedanzen ($Z_1, .., Z_n$) verwendet werden.

6. Verfahren nach einem der Ansprüche 1 bis 5, **dadurch gekennzeichnet, dass** die Anregung mittels eines Frequenzgenerators erfolgt, vorzugsweise durch Erzeugung eines breitbandigen Signals, vorzugsweise einem weissen Rauschen.

7. Verfahren nach einem der Ansprüche 1 bis 6, **dadurch gekennzeichnet, dass** die Übertragungsfunktionen ($U_{ab}$) aus der Division des gemessenen Autopowerspektrums der Anregung ($U_a U_a^*$) durch das gemittelte Crosspowerspektrum ($U_b U_a^*$) zwischen Anregung und zu messender Impedanz berechnet wird.

8. Verfahren nach einem der Ansprüche 1 bis 7 zur Bestimmung der akustischen Impedanz (Z) von Hohlräumen, wie des Ohres im Zusammenhang mit Hörgeräten, **dadurch gekennzeichnet, dass** eine Sonde mit einem Mikrofon und einem Lautsprecher dicht in die Eintrittsöffnung des Hohlraumes eingesetzt wird und akustische Signale über den Lautsprecher in den Hohlraum übertragen werden und über das Mikrofon wieder empfangen werden.

9. Verfahren zur Bestimmung der akustischen Impedanz (Z), bei welchem

- eine Sonde mit einem Mittel zur akustischen Anregung und einem Mikrofon an den zu messenden Bereich angesetzt wird;
- akustische Signale über das genannte Mittel ausgesendet werden und über das Mikrofon wieder empfangen werden;
- die über das Mikrofon empfangenen Signale in elektrische Signale umgewandelt und einer Auswertungseinheit zugeführt werden, in welcher der Wert der Impedanz bestimmt wird;
- als Berechnungsgrundlage für die Impedanz (Z) mit einer definierten Anregung und einer anschliessenden Kettenübertragungsmatrix (A) in Form eines Zweitores mit den Koeffizienten $a_{11}$, $a_{12}, a_{21}, a_{22}$ bis zur Impedanz (Z) gearbeitet wird;
- wobei jeweils das Spannungsverhältnis zwischen Anregung ($u_a$) und Messspannung ($U_b$) als dimensionslose Übertragungsfunktion ($U_{ab}$) in Form einer komplexen Funktion der Anregungsfrequenz beschrieben wird;
- mittels einer Anzahl bekannter akustischer Impedanzen ($Z_1, .., Z_n$) welche unterschiedliche Kalibrierbereiche abdecken, eine Reihe von akustischen Kalibriersignalen mittels der definierten Anregung erzeugt werden;
- die jeweils über das Mikrofon empfangenen Kalibriersignale erfasst und die elektrischen Werte ($U_b$) zusammen mit dem jeweiligen Spannungswert der Anregung ($u_a$) zur Ermittlung der Resultate der jeweiligen Übertragungsfunktionen ($U_{ab1}, .., U_{abn}$) zusammengeführt werden,

**dadurch gekennzeichnet, dass** zwei hintereinander geschaltete Kettenübertragungsmatrizen (A,B) in Form von zwei seriell geschalteten Zweitoren verwendet werden, wobei das Mikrofon zwischen den beiden Zweitoren, zwischen dem Ausgang des ersten Zweitores und dem Eingang des zweiten Zweitores angeordnet wird, und dass die Matrixelemente der beiden Kettenmatrizen (A,B) auf drei Basisparameter ($d_1$, $d_2$, $d_3$) reduziert werden, welche durch Messung von mindestens drei Kalibrierimpedanzen mit bekannter Impedanz und entsprechender Auflösung des überbestimmten linearen Gleichungssystems ermittelt werden, und danach die zu messende Impedanz (Z) durch Messung der Übertragungsfunktion ($U_{ab}$) als Division zwischen Anregung ($u_a$) und Mikrofonsignal ($U_b$) unter Verwendung der Basisparameter ($d_1$, $d_2$, $d_3$) ermittelt wird.

10. Verfahren nach Anspruch 9, **dadurch gekennzeichnet, dass** das lineare Gleichungssystem im Sinne der kleinsten Quadrate gelöst wird.

11. Verfahren nach einem der Ansprüche 1 bis 10, **da-**

**durch gekennzeichnet, dass** zwischen Anregung und Mikrofon ein akustischer Widerstand angeordnet wird.

12. Verfahren nach Anspruch 11, **dadurch gekennzeichnet, dass** der akustische Widerstand in Bezug auf die Sensitivität auf Mikrofonfehler optimiert wird.

13. Verfahren nach einem der Ansprüche 1 bis 12, **dadurch gekennzeichnet, dass** eine frequenz- und/oder impedanzspezifische Gewichtung der linearen Gleichungssysteme durchgeführt wird.

14. Anwendung des Verfahrens nach einem der Ansprüche 1 bis 13 für die Messung von Impedanzen von Hörgeräteteilen, Hörgeräteteilsystemen und Hörgeräteschalen, insbesondere Vents.

15. Anwendung des Verfahrens nach einem der Ansprüche 1 bis 13 für die Messung von Impedanzen im Rahmen von Qualitätskontrollen, vorzugsweise von Hörgerätewandlern, porösen Körpern, Membranen und Textilien.

**Claims**

1. Method for measuring the acoustic impedance, comprising the steps of

> - arranging a probe with a means for the acoustic stimulation and a micro at the area to be measured
> - sending out acoustic signals over said means and receiving them again over the micro;
> - transforming the signals received by the micro into electrical signals and transferring them to an analysis unit, in which the value of the impedance will be determined;
> - using a defined stimulation followed by a chain transfer matrix (A) in form of a twoport with the coefficients $a_{11}, a_{12}, a_{21}, a_{22}$ until the impedance (Z) as a calculation base for the impedance (Z);
> - whereby the voltage ratio between stimulation ($U_a$) and measuring voltage ($U_b$) is described as a dimensionless transfer function ($U_{ab}$) in form of a complex function of the stimulation frequency;
> - generating a series of acoustic calibration signals by means of a number of known acoustic impedances ($Z_1,...,Z_n$) covering different calibration scopes by means of the defined stimulation;
> - recording the calibration signals received by the micro and merging the electric values ($U_b$) together with the respective voltage value of the stimulation ($U_a$) for the evaluation of the results of the respective transfer functions ($U_{ab1}, ...,$

$U_{abn}$), **characterized by**
- merging together the transfer functions ($U_{ab1}, ..., U_{abn}$) of the calibration signals into an over determined linear system of equations and solving the system of equations and calculating the two coefficients; and finally by
- determining the impedance (Z) to be measured by evaluating the transfer function ($U_{ab}$) under defined stimulation ($U_a$) by use of the coefficients $a_{11}, a_{12}$ of the chain transfer matrix (A) determined by the calibration.

2. Method of claim 1, wherein a loudspeaker is used as a means for the acoustic stimulation.

3. Method of claim 1 or 2, wherein the over determined linear system will be solved in terms of minimum squares.

4. Method of any of claims 1 to 3, wherein at least two different impedances ($Z_1, Z_2$) are used.

5. Method of any of claims 1 to 4, wherein a combination of hollow bodies and small tubes with defined dimensions and known impedances ($Z_1,...,Z_n$) are used as calibrating impedances.

6. Method of any of claims 1 to 5, wherein a frequency generator is used for the stimulation, preferably by generating a broad band signal, preferably a white noise.

7. Method of any of claims 1 to 6, wherein the transfer functions ($U_{ab}$) will be calculated by the division of the measured auto power spectrum of the stimulation ($U_a U_a{}^*$) through the average cross power spectrum ($U_b U_a{}^*$) between stimulation and impedance to be measured.

8. Method of any of claims 1 to 7, for the determination of the acoustic impedance (Z) of cavities, such as the ear in connection with hearing aids, comprising the steps of

> - arranging a probe with a microphone and a loudspeaker near to the inlet opening of the cavity and
> - sending out acoustic signals over the speaker into the cavity and
> - receiving such signals again by the micro.

9. Method for measuring the acoustic impedance, comprising:

> - arranging a probe with a means for the acoustic stimulation and a micro at the area to be measured;
> - sending out acoustic signals over said means and receiving them again over the micro;
- transforming the signals received by the micro into electrical signals and transferring them to an analysis unit, in which the value of the impedance will be determined;
- using a defined stimulation followed by a chain transfer matrix (A) in form of a twoport with the coefficients $a_{11}, a_{12}, a_{21}, a_{22}$ until the impedance (Z) as a calculation base for the impedance (Z);
- whereby the voltage ratio between stimulation ($U_a$) and measuring voltage ($U_b$) is described as a dimensionless transfer function ($U_{ab}$) in form of a complex function of the stimulation frequency;
- generating a series of acoustic calibration signals by means of a number of known acoustic impedances ($Z_1,..., Z_n$) covering different calibration scopes by means of the defined stimulation;
- recording the calibration signals received by the micro and merging the electric values ($U_b$) together with the respective voltage value of the stimulation ($U_a$) for the evaluation of the results of the respective transfer functions ($U_{ab1}$, Uabn), **characterized by**
- using two series connected chain transfer matrices (A,B) in form of two serial connected twoports, whereby the micro is arranged between both twoports between the output of the first twoport and the input of the second twoport and
- reducing the matrix elements of the two chain matrices (A,B) to three base parameters ($d_1$, $d_2$, $d_3$), which are evaluated by measurements of at least three calibration impedances with known impedance and the respective solution of the overdetermined linear system of equations to further determine the impedance (Z) to be measured by measuring of the transfer function ($U_{ab}$) as a division between the stimulation ($U_a$) and the micro signal ($U_b$) by use of the base parameters ($d_1,d_2,d_3$).

10. Method of claim 9, whereby the linear system of equations will be solved in terms of minimum squares.

11. Method of any of claims 1 to 10, whereby an acoustic resistor ist arranged between the stimulation and the micro.

12. Method of claim 11, whereby the sensitivity of the acoustic resistor is optimized with respect to micro errors.

13. Method of any of claims 1 to 12, whereby a frequency and/or impedance specific weighting of the linear systems of equations will be performed.

14. Use of the method according to any of claims 1 to 13 for measuring impedances of hearing device parts, part systems of hearing devices and shells of hearing devices, especially of vents.

15. Use of the method according to any of claims 1 to 13 for measuring impedances in connection with quality controls, preferably of hearing device transducers, porous bodies, membranes and textiles.

**Revendications**

1. Procédé de mesure de l'impédance acoustique (Z), dans lequel

- une sonde avec un moyen pour la stimulation acoustique et un micro sont arrangés dans la zone à mesurer ;
- des signaux acoustiques sont émis par ledit moyen et reçus à nouveau par le micro ;
- les signaux reçus par le micro sont transformés en signaux électriques et transférés à une unité d'analyse dans laquelle la valeur de l'impédance est déterminée ;
- comme base de calcul de l'impédance (Z) on utilise une stimulation définie suivie d'une matrice de transfert en chaîne (A) sous forme d'un deuxportes avec les coefficients $a_{11}, a_{12}, a_{21}, a_{22}$ jusqu'à l'impédance (Z) ;
- le rapport des tensions entre stimulation ($U_a$) et la mesure ($U_b$) étant décrit comme une fonction de transfert sans dimension ($U_{ab}$) sous forme d'une fonction complexe de la fréquence de stimulation ;
- une série de signaux de calibration acoustiques étant produite au moyen d'un nombre d'impédances acoustiques connu ($Z_1,...,Z_n$) couvrant des champs de calibrations distincts au moyen de la stimulation définie ;
- les signaux de calibration reçus par le micro sont recueillis et les valeurs électriques ($U_b$) avec les valeurs des tensions respectives de la stimulation ($U_a$) sont joints pour l'évaluation des résultats des fonctions de transfert ($U_{ab1},..., U_{abn}$) respectifs, **caractérisé en ce que**
- les fonctions de transfert ($U_{ab1},...,U_{abn}$) des signaux de calibration sont réunies dans un système d'équations linéaire redondant et le système d'équations est résolu et les deux coefficients $a_{11}, a_{12}$ de la matrice de transfert en chaîne (A) sont calculés, et
- l'impédance (Z) à mesurer est déterminée par l'évaluation de la fonction de transfert ($U_{ab}$) sous une stimulation définie en utilisant les coefficients $a_{11}, a_{12}$ de la matrice de transfert en chaîne (A) obtenus par calibration.

**2.** Procédé selon la revendication 1, **caractérisé en ce que** l'on utilise comme moyen pour la stimulation acoustique un haut-parleur.

**3.** Procédé selon la revendication 1 ou 2, **caractérisé en ce que** le système d'équations linéaire redondant est résolu par la méthode des plus petits carrés.

**4.** Procédé selon l'une des revendications 1 à 3, **caractérisé en ce que** l'on utilise au moins deux impédances $(Z_1, Z_2)$ distinctes.

**5.** Procédé selon l'une des revendications 1 à 4, **caractérisé en ce que** l'on utilise comme impédances de calibration une combinaison de corps creux et tubes à dimensions définies et impédances connues $(Z_1,...,Z_n)$.

**6.** Procédé selon l'une des revendications 1 à 5, **caractérisé en ce que** la stimulation se fait au moyen d'un générateur de fréquences, de préférence par la production d'un signal à bande large, de préférence d'un bruit blanc.

**7.** Procédé selon l'une des revendications 1 à 6, **caractérisé en ce que** les fonctions de transmission $(U_{ab})$ sont calculées par division du spectre autopower mesuré de la stimulation $(U_a U_a^*)$ par la moyenne du spectre crosspower $(U_b U_a^*)$ entre stimulation et impédance à mesurer.

**8.** Procédé selon l'une des revendications 1 à 7 pour déterminer l'impédance acoustique (Z) de cavités, comme l'oreille en rapport avec des appareils de correction auditifs, **caractérisé en ce qu'**une sonde avec un micro et un haut-parleur est placée de façon étanche dans l'ouverture d'entrée de la cavité et des signaux acoustiques étant transmis au moyen du haut-parleur dans la cavité et reçus à nouveau par le micro.

**9.** Procédé de mesure de l'impédance acoustique (Z), dans lequel

- une sonde avec un moyen pour la stimulation acoustique et un micro sont arrangés dans la zone à mesurer;
- des signaux acoustiques sont émis par ledit moyen et reçus à nouveau par le micro ;
- les signaux reçus par le micro sont transformés en signaux électriques et transférés à une unité d'analyse dans laquelle la valeur de l'impédance est déterminée ;
- comme base de calcul de l'impédance (Z) on utilise une stimulation définie suivie d'une matrice de transfert en chaîne (A) sous forme d'un deuxportes avec les coefficients $a_{11}, a_{12}, a_{21}, a_{22}$ jusqu'à l'impédance (Z) ;

- le rapport des tensions entre stimulation $(U_a)$ et la mesure $(U_b)$ étant décrit comme une fonction de transfert sans dimension $(U_{ab})$ sous forme d'une fonction complexe de la fréquence de stimulation ;
- une série de signaux de calibration acoustiques étant produite au moyen d'un nombre d'impédances acoustiques connu $(Z_1,...,Z_n)$ couvrant des champs de calibrations distincts au moyen de la stimulation définie ;
- les signaux de calibration reçus par le micro sont recueillis et les valeurs électriques $(U_b)$ avec les valeurs des tensions respectives de la stimulation $(U_a)$ sont joints pour l'évaluation des résultats des fonctions de transfert $(U_{ab1},.., U_{abn})$ respectifs, **caractérisé en ce que** l'on utilise deux matrices de transfert en chaîne (A, B) reliées en série sous forme de deux deuxportes connectés en série, ledit micro étant placé entre lesdits deuxportes entre la sortie du premier deuxporte et l'entrée du deuxième deuxporte, et
- les éléments matrices des deux matrices en chaîne (A,B) étant réduits à trois paramètres de base $(d_1, d_2, d_3)$ évalués par mesure d'au moins trois impédances de calibration à impédance connue et la résolution correspondante du système d'équations linéaire redondant, suivi
- par l'évaluation de l'impédance (Z) à mesurer par la mesure de la fonction de transfert $(U_{ab})$ sous forme de la division entre stimulation $(U_a)$ et signal du micro $(U_b)$ en utilisant les paramètres de base $(d_1, d_2, d_3)$.

**10.** Procédé selon la revendication 9, **caractérisé en ce que** le système d'équations linéaire est résolu par la méthode des plus petits carrés.

**11.** Procédé selon l'une des revendications 1 à 10, **caractérisé en ce qu'**une résistance acoustique est placée entre stimulation et micro.

**12.** Procédé selon la revendication 11, **caractérisé en ce que** la résistance acoustique en ce qui concerne la sensitivité est optimisée par rapport à des fautes de micro.

**13.** Procédé selon l'une des revendications 1 à 12, **caractérisé en ce que** l'on procède à une pondération spécifique de la fréquence et/ou de l'impédance dans les systèmes d'équations linéaires.

**14.** Application du procédé selon l'une des revendications 1 à 13 pour mesurer les impédances de composantes d'appareils auditifs, de systèmes de composantes d'appareils auditifs et coques d'appareils auditifs, notamment de vents.

**15.** Application du procédé selon l'une des revendications 1 à 13 pour mesurer des impédances dans le cadre de contrôles de qualité, de préférence de convertisseurs pour appareils auditifs, corps poreux, membranes et matériaux textiles.

## Fig. 1

## Fig. 2

## Fig. 3

$$\begin{bmatrix} U_{ab1} \\ U_{ab2} \\ . \\ . \\ . \\ U_{abn} \end{bmatrix} = \begin{bmatrix} 1 & 1/Z_1 \\ 1 & 1/Z_2 \\ . & . \\ . & . \\ . & . \\ 1 & 1/Z_n \end{bmatrix} \begin{bmatrix} a_{11} \\ a_{12} \end{bmatrix}$$

## Fig. 4

## Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5792072 A

- US 4289143 A

**In der Beschreibung aufgeführte Nicht-Patentliteratur**

- **J-P DALMONT.** Acoustic impedance measurement, Part I : A review. *Journal of Sound an Vibration,* 07. Juni 2001, vol. 243 (3), 427-439